# EUROPÄISCHE PATENTSCHRIFT

(11) **EP 0 879 740 B1**
(45) Veröffentlichungstag und Bekanntmachung des Hinweises auf die Patenterteilung: **13.03.2002**
(21) Anmeldenummer: 98109097.0
(22) Anmeldetag: 19.05.1998
(51) Int. Cl.: B60R 22/20

(54) **Höhenversteller für einen Umlenkbeschlag eines Fahrzeug-Sicherheitsgurts**
Height ajusting device for a vehicle seat belt guide loop
Dispositif de réglage de hauteur du renvoi latéral d'une ceinture de securité de véhicule

(30) Priorität: 23.05.1997 DE 29709121 U
(43) Veröffentlichungstag der Anmeldung: 25.11.1998
(73) Patentinhaber: TRW Occupant Restraint Systems GmbH & Co. KG, 73551 Alfdorf (DE)
(72) Erfinder: Biller, Dieter, 73553 Alfdorf-Brech (DE)
(74) Vertreter: Degwert, Hartmut, Dipl.-Phys.

(56) Entgegenhaltungen:
- DE-A- 4 405 106
- US-A- 5 529 344

## Beschreibung

Die Erfindung betrifft einen Höhenversteller für einen Umlenkbeschlag eines Fahrzeug-Sicherheitsgurtes, mit einer Schiene, die mit mindestens einer Befestigungsschraube am Fahrzeugaufbau befestigt werden kann, wobei die Schiene über ein Deformationselement am Fahrzeugaufbau abgestützt ist.

Die Schiene eines solchen Höhenverstellers dient als Führung für einen Schlitten, an welchem der Umlenkbeschlag für den Sicherheitsgurt höhenverstellbar angebracht ist. Wie auch andere Bauteile im Fahrzeuginnenraum muß auch die Schiene für den höhenverstellbaren Umlenkbeschlag nachgiebig gestaltet sein, so daß bei einem Aufprall des Kopfes eines Fahrzeuginsassens bestimmte Grenzwerte, die entweder herstellerseitig vorgegeben oder gesetzlich vorgeschrieben sind, nicht überschritten werden. Durch eine Kunststoffabdeckung für insbesondere die Schiene lassen sich die bei einem Kopfaufprall wirkenden Kräfte vermindern; für den Fall eines Auftreffens direkt auf den Umlenkbeschlag ist es jedoch erforderlich, daß die Schiene insgesamt nachgibt.

Aus der US-A-5 529 344 ist ein Höhenversteller der eingangs genannten Art bekannt, bei dem die Schiene nachgiebig am Fahrzeugaufbau befestig ist. Bei dieser bekannten Gestaltung wird eine Druckfeder verwendet, die zwischen der Schiene und dem Fahrzeugaufbau angeordnet ist. Dadurch ergibt sich eine vergleichsweise große Bautiefe.

Die Aufgabe der Erfindung besteht darin, einen Höhenversteller zu schaffen, bei dem der erforderliche Bauraum besonders gering ist und dennoch ein Nachgeben der Schiene bei einem Aufprall auf sie möglich ist.

Zu diesem Zweck ist gemäß der Erfindung bei einem Höhenversteller der eingangs genannten Art vorgesehen, daß die Schiene einen Bodenteil aufweist und das Deformationselement auf der vom Fahrzeugaufbau abgewandten Seite des Bodenteils angeordnet ist. Diese Gestaltung berücksichtigt die folgende Erkenntnis: Für eine optimale Nachgiebigkeit der Schiene ist es vorteilhaft, wenn ein möglichst großer Deformationsweg zur Verfügung steht. Da aber ein kompakter Aufbau mit einer geringen Bautiefe erzielt werden soll, kann bei den Gegebenheiten insbesondere an einer B-Säule eines Fahrzeugs der Deformationsweg nicht beliebig vergrößert werden, da andernfalls der Umlenkbeschlag übermäßig weit in den Fahrzeuginnenraum hineinragen würde. Gemäß der Erfindung befinden sich zwischen dem Fahrzeugaufbau und der Schiene des Höhenverstellers keine Deformationselemente, so daß der zur Verfügung stehende Raum vollständig als Deformationsweg genutzt werden kann.

Gemäß der bevorzugten Ausführungsform der Erfindung ist weiterhin vorgesehen, daß die Schiene auf der Befestigungsschraube verschiebbar angeordnet ist. Bei dieser Gestaltung dient die Befestigungsschraube sowohl als Halteelement für die Schiene als auch als Führung für die Schiene, wenn diese relativ zur Karosserie bewegt wird.

Weiterhin kann vorgesehen sein, daß auf der Befestigungsschraube eine Distanzhülse angeordnet ist, auf der die Schiene verschiebbar ist. Mit dieser Distanzhülse kann der Deformationsweg vorgegeben werden, der für ein Nachgeben der Schiene bei einem Aufprall eines Fahrzeuginsassen zur Verfügung steht.

Es kann auch vorgesehen sein, daß das Deformationselement zwischen der Distanzhülse und dem Kopf der Befestigungsschraube angeordnet ist. Bei dieser Gestaltung kann die Schiene zusammen mit der Befestigungsschraube, der Distanzhülse und dem Deformationselement als vormontierte Einheit geliefert werden.

Vorzugsweise ist vorgesehen, daß die Schiene ein Hohlprofil ist und das Deformationselement im Inneren der Schiene angeordnet ist. Bei dieser Gestaltung ergibt sich zum einen eine besonders kompakte Bauform und zum anderen eine optimale Einleitung der Kraft von der Schiene in das Deformationselement.

Gemäß einer bevorzugten Ausführungsform ist vorgesehen, daß das Deformationselement bügelförmig mit einem Mittelsteg, an dem die Befestigungsschraube angreift, und mit zwei Schenkeln ausgebildet ist, die an der Schiene angreifen. Ein solches Deformationselement läßt sich vergleichsweise einfach herstellen, beispielsweise aus Stahl, wobei sich mit verschiedenen Gestaltungen der Schenkel das Deformationsverhalten an die jeweiligen Anforderungen anpassen läßt.

Weitere vorteilhafte Ausgestaltungen der Erfindung ergeben sich aus den Unteransprüchen.

Die Erfindung wird nachfolgend unter Bezugnahme auf verschiedene Ausführungsformen beschrieben, die in den beigefügten Zeichnungen dargestellt sind. In diesen zeigen:
- Fig. 1 eine schematische Seitenansicht eines erfindungsgemäßen Höhenverstellers mit einer Schiene, die an einem Karosserieteil befestigt ist;
- Fig. 2 eine perspektivische Ansicht eines Endes der Schiene eines erfindungsgemäßen Höhenverstellers;
- Fig. 3 einen Querschnitt durch die Schiene eines erfindungsgemäßen Höhenverstellers im Ausgangszustand;
- Fig. 4 einen Querschnitt durch die Schiene eines erfindungsgemäßen Höhenverstellers mit verformten Deformationselement;
- Fig. 5 eine perspektivische Ansicht einer ersten Variante eines Deformationselements;
- Fig. 6 eine perspektivische Ansicht einer zweiten Variante eines Deformationselements; und
- Fig. 7 eine perspektivische Ansicht eines Endes der Schiene eines erfindungsgemäßen Höhenverstellers mit einem Deformationselement gemäß einer dritten Alternative.

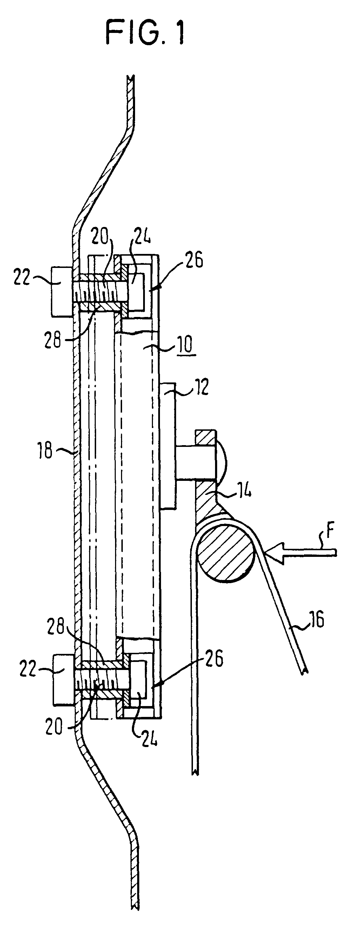

In Fig. 1 ist ein erfindungsgemäßer Höhenversteller mit einer Schiene 10 dargestellt, in der verschiebbar ein Schlitten 12 angeordnet ist, an dem ein Umlenkbeschlag 14 für einen Fahrzeug-Sicherheitsgurt 16 angebracht ist. Die Schiene 10 ist an einem Karosserieteil 18 des Fahrzeugaufbaus befestigt, beispielsweise einer B-Säule eines Fahrzeugs. Die Schiene ist ein Hohlprofil, das an der vom Karosserieteil abgewandten Seite geöffnet ist, so daß ein Zugang zum Schlitten 12 möglich ist.

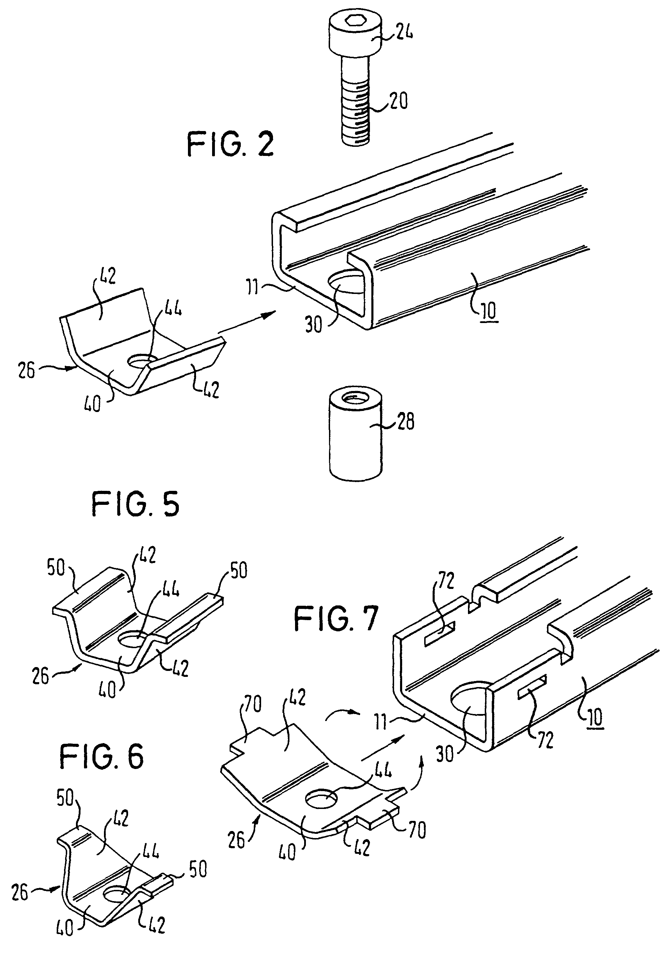

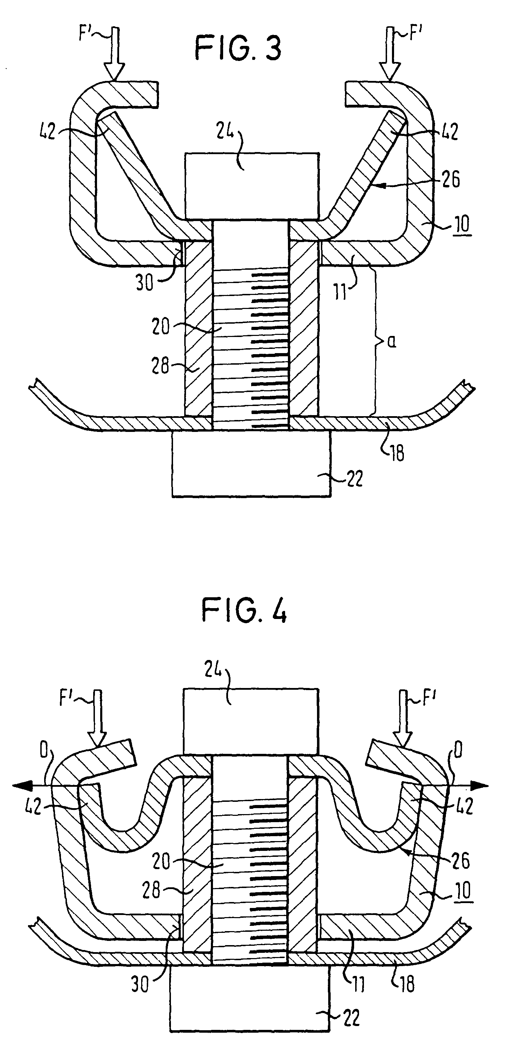

Für die Befestigung der Schiene 10 wird eine Befestigungsschraube 20 (siehe auch Figuren 2 und 3) verwendet, die in ein Gegenstück 22 am Karosserieteil 18 eingeschraubt ist. Zwischen dem im Inneren der Schiene 10 liegenden Kopf 24 der Schraube 20 und dem Gegenstück 22 sind ein Deformationselement 26 und eine Distanzhülse 28 angeordnet. Die Schiene ist mit einer Öffnung 30 versehen, deren Innendurchmesser geringfügig größer als der Außendurchmesser der Distanzhülse 28 ist. Die Schiene ist somit auf diesem verschiebbar.

Wie insbesondere in Fig. 2 zu sehen ist, ist das Deformationselement 26 bügelförmig mit einem Mittelsteg 40 und zwei Schenkeln 42 ausgebildet. Im Mittelsteg ist eine Bohrung 44 für die Befestigungsschraube 20 vorgesehen. Wie insbesondere in Fig. 3 zu sehen ist, ist das Deformationselement 26 so im Inneren der Schiene 10 angeordnet, daß es diese in einer Ausgangsstellung beabstandet vom Karosserieteil 18 in der Nähe des Kopfes 24 der Befestigungsschraube 20 hält. Zwischen dem Karosserieteil 18 und der Schiene 10 ergibt sich somit ein Abstand a, der als Deformationsweg zur Verfügung steht.

Wenn es zu einem Aufprall des Fahrzeuginsassen auf beispielsweise den Umlenkbeschlag kommt, wird entlang dem Pfeil F von Fig. 1 eine Kraft in diesen eingeleitet. Diese Kraft wird über den Schlitten 12 in die Schiene 10 eingeleitet und stellt sich an dem in den Figuren 3 und 4 dargestellten Ende der Schiene 10 als zwei Teilkräfte F' dar, die an jeder Seite der Schiene wirken. Diese Kräfte werden über die freien Außenenden der Schenkel 42, die sich an der Schiene abstützen, in das Deformationselement 26 und dann über die Distanzhülse 28 in das Karosserieteil 18 eingeleitet. Wenn eine konstruktiv vorgegegebene Grenzbelastung des Deformationselementes 26 überschritten wird, kommt es zu einer plastischen Verformung, wie sie in Fig. dargestellt ist. Im Laufe dieser Verformung wird die Schiene 10 zum Karosserieteil 18 hin bewegt, wobei der gesamte Abstand a als Deformationsweg zur Verfügung steht. Aufgrund der plastischen Verformung des Deformationselementes 26 wird Energie umgesetzt, so daß sich eine geringe Belastung des auf den Umlenkbeschlag auftreffenden Fahrzeuginsassen ergibt. In Abhängigkeit von der gewählten Gestaltung für das Deformationselement 26 kommt es auch zu einer plastischen Verformung der Schiene 10 aufgrund der auf diese von dem Deformationselement übertragenen Kräfte. Dies ist ebenfalls in Fig. 4 dargestellt, wobei die von dem Deformationselement 26 auf die Schiene 10 übertragenen Kräfte mittels der Pfeile D symbolisiert sind.

In Fig. 5 ist eine erste Variante des Deformationselementes 26 dargestellt. Von dem in den Figuren 1 bis 4 dargestellten Deformationselement unterscheidet es sich dadurch, daß am freien Außenende der Schenkel 42 eine Umbiegung 50 vorgesehen ist. Diese Umbiegung verringert die Grenzbelastung, ab der es zu einer plastischen Verformung des Deformationselementes kommt.

In Fig. 6 ist eine zweite Variante des Deformationselementes 26 dargestellt. Das gezeigte Deformationselement 26 unterscheidet sich von dem in Fig. 5 dargestellten Deformationselement dadurch, daß sich die Breite der Schenkel 42 ausgehend von dem Mittelsteg 40 nach außen hin vermindert. Durch diese Gestaltung wird die Grenzbelastung, ab der es zu einer plastischen Verformung des Deformationselementes 26 kommt, weiter vermindert, wobei der Widerstand gegen eine Deformation mit zunehmender Verformung ansteigt, da das zu verformende Material entsprechend der Zunahme der Breite der Schenkel 42 ansteigt.

In Fig. 7 ist eine dritte Variante des Deformationselementes 26 dargestellt. Das gezeigte Deformationselement 26 unterscheidet sich von dem Deformationselement aus Fig. 2 durch zwei Laschen 70, die an den freien Außenenden der Schenkel 42 vorgesehen sind. Diese Laschen werden in geeignete Öffnungen 72 eingehängt, die in der Schiene vorgesehen sind.

Als Material für das Deformationselement 26 ist grundsätzlich jeder Werkstoff geeignet, der die notwendige plastische Verformung ermöglicht. Insbesondere bietet sich die Verwendung von Stahl an. Dieser Werkstoff bietet auch eine ausreichende Festigkeit für die Belastungen, die beim Rückhalten des Fahrzeuginsassen mittels des Sicherheitsgurtes 16 auftreten und auf das Deformationselement 26 einwirken, da dieses nicht nur beim Auftreffen eines Fahrzeuginsassen auf die Schiene oder den Umlenkbeschlag belastet wird, sondern auch bei auf die Schiene einwirkenden Zugbelastungen im Kraftfluß zwischen dem Karosserieteil und der Schiene 10 liegt.

## Patentansprüche

1. Höhenversteller für einen Umlenkbeschlag (14) eines Fahrzeug-Sicherheitsgurtes (16), mit einer Schiene (10), die mit mindestens einer Befestigungsschraube (20) am Fahrzeugaufbau (18) befestigt werden kann, wobei die Schiene (10) über ein Deformationselement (26) am Fahrzeugaufbau (18) abgestützt ist,
**dadurch gekennzeichnet, daß** die Schiene (10) einen Bodenteil (11) aufweist und das Deformationselement (26) auf der vom Fahrzeugaufbau abgewandten Seite des Bodenteils (11) angeordnet ist.

2. Höhenversteller nach Anspruch 1, **dadurch gekennzeichnet, daß** die Schiene (10) auf der Befestigungsschraube (20) verschiebbar angeordnet ist.

3. Höhenversteller nach Anspruch 1, **dadurch gekennzeichnet, daß** auf der Befestigungsschraube (20) eine Distanzhülse (28) angeordnet ist, auf der die Schiene (10) verschiebbar ist.

4. Höhenversteller nach Anspruch 3, **dadurch gekennzeichnet, daß** das Deformationselement (26) zwischen der Distanzhülse (28) und dem Kopf (24) der Befestigungsschraube (20) befestigt ist.

5. Höhenversteller nach einem der Ansprüche 3 und 4, **dadurch gekennzeichnet, daß** die Schiene (10) ein Hohlprofil ist und das Deformationselement (26) im Inneren der Schiene (10) angeordnet ist.

6. Höhenversteller nach einem der vorhergehenden Ansprüche, **dadurch gekennzeichnet, daß** das Deformationselement (26) bügelförmig mit einem Mittelsteg (40), an dem die Befestigungsschraube (20) angreift, und mit zwei Schenkeln (42) ausgebildet ist, die an der Schiene (10) angreifen.

7. Höhenversteller nach Anspruch 6, **dadurch gekennzeichnet, daß** an den freien Außenenden der Schenkel (42) des Deformationselements (26) jeweils eine Umbiegung (50) vorgesehen ist.

8. Höhenversteller nach einem der Ansprüche 6 und 7, **dadurch gekennzeichnet, daß** an den freien Außenenden der Schenkel (42) jeweils eine Lasche (70) vorgesehen ist, die in eine Öffnung (72) in der Schiene (10) eingreift.

9. Höhenversteller nach einem der Ansprüche 6 bis 8, **dadurch gekennzeichnet, daß** die Breite der Schenkel (42) vom Mittelsteg (40) nach außen abnimmt.

## Claims

1. A vertical adjuster for a deflection fitting (14) of a vehicle safety belt (16), with a rail (10) which can be fastened to the vehicle body (18) by at least one fastening screw (20), the rail (10) being supported on the vehicle body (18) by means of a deformation element (26),
**characterised in that** the rail (10) has a base part (11) and the deformation element (26) is arranged on the side of the base part (11) facing away from the vehicle body.

2. The vertical adjuster according to Claim 1, **characterised in that** the rail (10) is arranged so as to be displaceable on the fastening screw (20).

3. The vertical adjuster according to Claim 1, **characterised in that** a spacer sleeve (28) is arranged on the fastening screw (20), on which spacer sleeve (28) the rail (10) is displaceable.

4. The vertical adjuster according to Claim 3, **characterised in that** the deformation element (26) is fastened between the spacer sleeve (28) and the head (24) of the fastening screw (20).

5. The vertical adjuster according to any of Claims 3 and 4, **characterised in that** the rail (10) is a hollow profile and the deformation element (26) is arranged inside the rail (10).

6. The vertical adjuster according to any of the preceding claims, **characterised in that** the deformation element (26) is constructed in a stirrup shape with a central cross-piece (40) on which the fastening screw (20) engages, and with two legs (42) which engage on the rail (10).

7. The vertical adjuster according to Claim 6, **characterised in that** a bend (50) is provided at each of the free outer ends of the legs (42) of the deformation element (26).

8. The vertical adjuster according to any of Claims 6 and 7, **characterised in that** a tongue (70) is provided at each of the free outer ends of the legs (42), which engages into an opening (72) in the rail (10).

9. The vertical adjuster according to any of Claims 6 to 8, **characterised in that** the width of the legs (42) decreases outwards from the central cross-piece (40).

## Revendications

1. Dispositif de réglage en hauteur pour une ferrure de renvoi (14) d'une ceinture de sécurité (16) de véhicule, comportant un rail (10) qui peut être fixé par au moins une vis de fixation (20) à la carrosserie (18) du véhicule, le rail (10) prenant appui sur la carrosserie (18) du véhicule par l'intermédiaire d'un élément de déformation (26),
**caractérisé en ce que** le rail (10) présente une partie de fond (11) et l'élément de déformation (26) est agencé sur la face de la partie de fond (11) qui est détournée de la carrosserie du véhicule.

2. Dispositif de réglage en hauteur selon la revendication 1, **caractérisé en ce que** le rail (10) est agencé de manière à pouvoir être déplacé sur la vis de fixation (20).

3. Dispositif de réglage en hauteur selon la revendication 1, **caractérisé en ce que** sur la vis de fixation (20) est agencée une douille d'écartement (28) sur laquelle le rail (10) peut être déplacé.

4. Dispositif de réglage en hauteur selon la revendication 3, **caractérisé en ce que** l'élément de déformation (26) est fixé entre la douille d'écartement (28) et la tête (24) de la vis de fixation (20).

5. Dispositif de réglage en hauteur selon l'une des revendications 3 et 4, **caractérisé en ce que** le rail (10) est un profilé creux et l'élément de déformation (26) est agencé à l'intérieur du rail (10).

6. Dispositif de réglage en hauteur selon l'une quelconque des revendications précédentes, **caractérisé en ce que** l'élément de déformation (26) est réalisé sous forme d'étrier avec une traverse médiane (40) sur laquelle s'engage la vis de fixation (20) et avec deux branches (42) qui s'engagent sur le rail (10).

7. Dispositif de réglage en hauteur selon la revendication 6, **caractérisé en ce qu'**il est prévu un coude (50) sur chacune des extrémités extérieures libres des branches (42) de l'élément de déformation (26).

8. Dispositif de réglage en hauteur selon l'une des revendications 6 et 7, **caractérisé en ce que** sur chacune des extrémités extérieures libres des branches (42) est prévue une patte (70) qui s'engage dans une ouverture (72) dans le rail (10).

9. Dispositif de réglage en hauteur selon l'une quelconque des revendications 6 à 8, **caractérisé en ce que** la largeur des branches (42) diminue depuis la traverse médiane (40) vers l'extérieur.
